# EUROPEAN PATENT APPLICATION

(11) **EP 1 873 634 A2**
(43) Date of publication of application: **02.01.2008**
(21) Application number: 07012541.4
(22) Date of filing: 26.06.2007
(51) Int. Cl.: G06F 9/44

(54) **HMI framework for extensible automation system engineering platforms**

(30) Priority: 29.06.2006 US 427423
(71) Applicant: Rockwell Automation Technologies, Inc., Mayfield Heights, OH 44124 (US)
(72) Inventor: Gottwald, Jürgen, 3383 Hürm (AT); Zoitl, Alois, 4150 RohRbach (AT); Auinger, Franz Johann, Dr., 4303 St. Pantaleon (AT); Strasser, Thomas Ignaz, 2343 St. Leonhard/Forst (AT); Terzic, Ivanka, 1150 Wien (AT); Christensen, James H., Cleveland Heights, OH 44121 (US); Hall, Kenwood, Hudson, OH 44236 (US)
(74) Representative: Englaender, Klaus

(57) **Abstract**

A GUI framework leverages interfaces of extensible engineering platforms to provide a tool that easily constructs HMIs for automation systems. The GUI framework can import existing GUI components and/or create new GUI components. The GUI framework can also combine basic GUI components to create complex composite GUI components. An import mechanism can also be employed to import existing GUI components by encapsulating them in common, reusable software code that is compatible with an extensible engineering platform. The GUI framework utilizes function blocks to represent the GUI components and automatically generates GUI function block networks with linking as required. This allows complex GUIs to be created with minimal user effort.

## Description

This application is related to co-pending and co-assigned U.S. application entitled "AUTOMATION HMI VISUALIZATION UTILIZING GUI FUNCTION BLOCK," client reference 06AB126, filed on June 29, 2006 and assigned Serial No. and is incorporated herein by reference.

### BACKGROUND

Human/machine interfaces (HMIs) or simply user interfaces are important to the successful operation and maintenance of automation equipment. User interfaces provide the essential communication link between operators and machines. This link allows operators to, among other things, setup devices, monitor device status during operation, as well as analyze device health. Without such user interfaces, high level automation would be difficult if not impossible to achieve, especially for distributed automation systems with diverse locations.

Over the years, user interfaces have gone through several changes. At first, user interfaces were simply dumb terminals, which merely displayed text messages to end-users indicative of some process performed by a server or processor associated with an automated device. For instance, a failed device would generate an internal error code representing a determined error which could then be matched to a particular error message and displayed to a user or operator on a display device. Over time, client side processing developed so as to enable a move from a text based interface to a graphical user interface (GUI). This transition shifted some of the processing burden away from the automated device or associated processor toward the client side GUI. These new GUIs vastly improved the ability of users to access information quickly and easily.

Modem automation typically consists of distributed systems that are often quite complex. This creates an additional burden on systems engineers who must change production processes to meet ever changing manufacturing guidelines. Extensible engineering platforms have been introduced that allow for some modularity in automation control design. They include interfaces or API's (application programming interfaces) that provide a base for building customized automation process designs. However, the user interfaces inherent in these platforms require extensive effort to set up and typically require the process designer to have skills in various programming languages. Thus, constructing GUIs for automation systems is tedious and extremely time consuming and often requires substantial new amounts of code to complete the interface.

### SUMMARY

The following presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

The subject matter relates generally to automation systems, and more particularly to human-machine interface (HMI) building in extensible engineering platforms. A GUI framework leverages interfaces of extensible engineering platforms to provide a tool that easily constructs HMIs. The GUI framework can import existing GUI components and/or create new GUI components. The GUI framework can also combine basic GUI components to create complex composite GUI components. An import mechanism can be employed to import existing GUI components by encapsulating them in common, reusable software code that is compatible with an engineering platform. This facilitates in avoiding re-writing of existing GUI components created for other automation design systems. The GUI framework utilizes function blocks to represent the GUI components and automatically generates GUI function block networks with linking as required. This allows complex GUIs to be created with minimal user effort. With simulation, a user can also review the designed GUI before it is linked to automation control function blocks. The GUI framework substantially reduces time and effort in producing HMIs for automation systems. By using extensible engineering platforms, it also substantially decreases the amount of code required to implement GUI design software and the learning curve.

To the accomplishment of the foregoing and related ends, certain illustrative aspects of embodiments are described herein in connection with the following description and the annexed drawings. These aspects are indicative, however, of but a few of the various ways in which the principles of the subject matter may be employed, and the subject matter is intended to include all such aspects and their equivalents. Other advantages and novel features of the subject matter may become apparent from the following detailed description when considered in conjunction with the drawings.

### BRIEF DESCRIPTION OF THE DRAWINGS

FIG. 1 is a block diagram of an HMI development system in accordance with an aspect of an embodiment.
FIG. 2 is another block diagram of an HMI development system in accordance with an aspect of an embodiment.
FIG. 3 is yet another block diagram of an HMI development system in accordance with an aspect of an embodiment.
FIG. 4 is a block diagram of an HMI development component operating in an extensible engineering environment in accordance with an aspect of an embodiment.
FIG. 5 is an illustration of an HMI development component and typical process flow in accordance with an aspect of an embodiment.
FIG. 6 is a block diagram of an automation system in accordance with an aspect of an embodiment.
FIG. 7 is another block diagram of an automation system in accordance with an aspect of an embodiment.
FIG. 8 is a flow diagram of a method of facilitating HMI development in accordance with an aspect of an embodiment.
FIG. 9 is a flow diagram of a method of importing GUI components for HMI development in accordance with an aspect of an embodiment.
FIG. 10 is a process flow for importing GUI components for HMI development in accordance with an aspect of an embodiment.
FIG. 11 illustrates an example operating environment in which an embodiment can function.
FIG. 12 illustrates another example operating environment in which an embodiment can function.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It may be evident, however, that subject matter embodiments may be practiced without these specific details. In other instances, well-known structures and devices are shown in block diagram form in order to facilitate describing the embodiments.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, *and*/*or* a computer. By way of illustration, both an application running on a server and the server can be a computer component. One or more components may reside within a process *and*/*or* thread of execution and a component may be localized on one computer *and*/*or* distributed between two or more computers.

Furthermore, the subject matter may be implemented as a method, apparatus, or article of manufacture using standard programming *and*/*or* engineering techniques to produce software, firmware, hardware, or any combination thereof. The term "article of manufacture" (or alternatively, "computer program product") as used herein is intended to encompass a computer program accessible from any computer-readable device, carrier, or media. Of course, those skilled in the art will recognize many modifications may be made to this configuration without departing from the scope or spirit of the subject matter.
In order to keep pace with an ever-changing market, industrial companies continually alter their production processes. Therefore, to produce innovative products, automation system designers must be able to provide process controls and monitoring modifications at an even faster pace. Embodiments of HMI development systems provided herein aide automation system designers in constructing graphical user interfaces (GUIs) for controlling and/or monitoring automation activities and systems. Current methods are burdensome and require extensive re-writing of software code to build GUIs. *In sharp contrast,* the instances disclosed herein allow for the system designers to quickly and easily construct simple and/or complex user interfaces for process control/monitoring. The instances utilize extensible engineering platforms to provide generic applications that can then be applied to GUI development. Existing GUI components can also be easily imported and even employed to construct additional, more complex GUIs. The GUI components themselves are represented with function blocks that help to reduce the learning curve when employing these instances. Function block networks representative of multiple GUI components can also be automatically generated to aid the system designer.

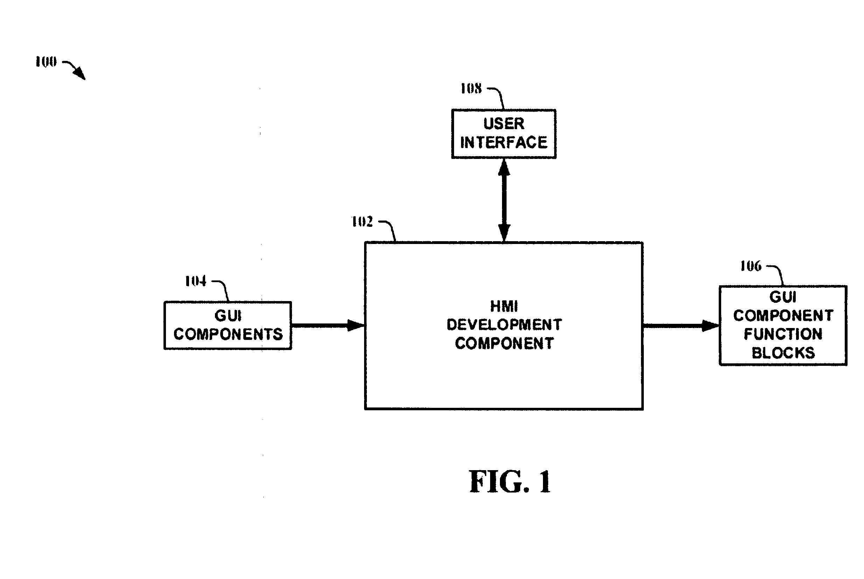

In FIG. 1, a block diagram of an HMI development system 100 in accordance with an aspect of an embodiment is shown. The HMI development system 100 is comprised of an HMI development component 102 that receives GUI components 104 and provides GUI component function blocks 106. The HMI development component 102 also interfaces directly and/or indirectly with user interface 108 to facilitate in the HMI development. The function block is a well established concept in industrial systems. A function block is generally described as a functional unit of software with a defined interface. In essence, a function block is a software module that treats the encapsulated behavior in a way similar to an electronic circuit. Its functionality is easily understood by users without requiring expertise in software. Function blocks can also be combined to form more complex composite function blocks, while maintaining a simplistic interface like a single function block.

The HMI development system 100 transforms the GUI components 104 into GUI component function blocks 106. The GUI components 104 can include, but are not limited to, GUI elements such as buttons, sliders, tanks, and/or other graphics and the like that are utilized in an HMI. The GUI component function blocks 106 represent single GUI component function blocks and/or composite GUI component function blocks and the like. The HMI development component 102 interacts with the user interface 108 to allow a user to development GUIs as needed. For example, a user can easily design a new HMI by selecting desired GUI component function blocks created from the GUI components 104, and the HMI development component 102 can then automatically link the individual and/or composite GUI component function blocks into a desired GUI component function block or function block network. By leveraging function blocks, instances of the HMI development system 100 substantially reduce the quantity of control software, substantially improve the quality of controls systems, provide more consistent module behavior, and substantially reduce development time for control systems. Additionally, because the HMI development component 102 can also be utilized to import existing GUI components, it 102 can be compatible with GUI components from other GUI development programs. This allows pre-existing GUI components to be employed by the HMI development system 100 without expensive code re-writing, drastically reducing implementation costs.

The HMI development system 100 is typically utilized with an engineering support system (ESS) or *engineering platform.* Engineering platforms allow system designers to construct distributed measurement and control systems. By conforming the engineering platform to a common standard for the whole development process, compatibility with individual processes can be assured. The IEC establishes industry standards, such as, for example, the IEC 61499 standard, to facilitate in establishing industry wide conformity. The IEC 61499 standard is an example of a standardized architecture based on function blocks and is compatible with instances of the HMI development system 100.

The HMI development system 100 utilizes extensible engineering platforms, like, for example, IEC 61499 compatible engineering platforms, to allow for easy integration with other development tools and to provide access to basic functions. These basic functions can include, but are not limited to, presentation functions (user interfaces), file handling, exploration, actions, and/or information processing (data handling) and the like. Extensible engineering platforms typically provide application programming interfaces (API) that allow for customized plug-in modules to be added to further enhance its capabilities (*e*.*g*., editing, debugging, GUI development, *etc.).* This allows an instance of the HMI development system 100 to be easily and quickly incorporated into extensible engineering platforms.

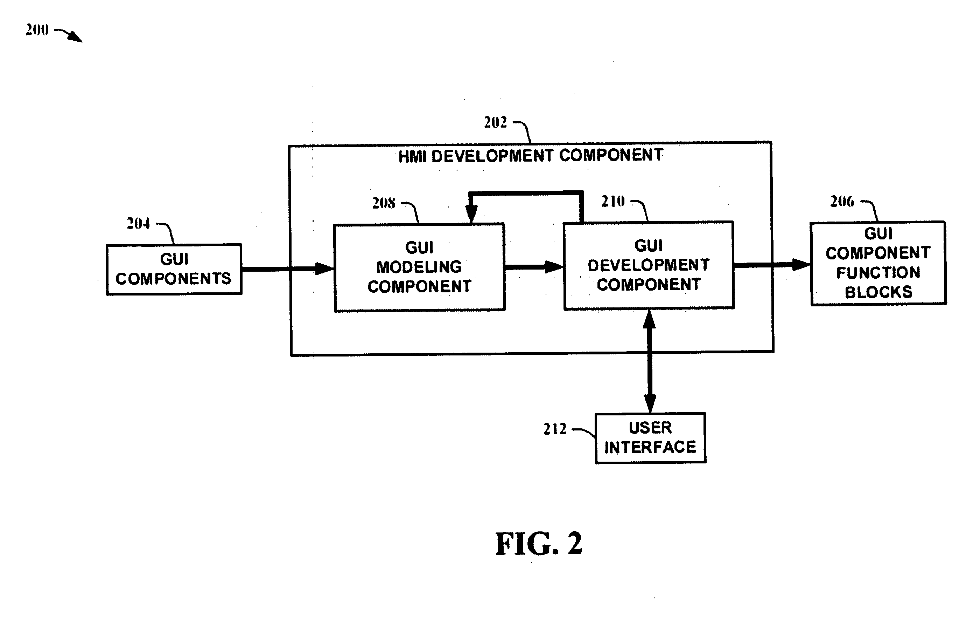

Turning to FIG. 2, another block diagram of an HMI development system 200 in accordance with an aspect of an embodiment is depicted. The HMI development system 200 is comprised of an HMI development component 202 that receives GUI components 204 and provides GUI component function blocks 206. The HMI development component 202 is comprised of a GUI modeling component 208 and a GUI development component 210 that interfaces directly and/or indirectly with a user interface 212. The GUI modeling component 208 receives the GUI components 204 and automatically generates GUI function blocks and function block networks as required.

The GUI development component 210 receives the GUI function block networks and provides for interactive HMI development via user interface 212. For example, the GUI components 204 can be comprised of GUI elements obtained from various existing sources. The GUI modeling component 208 then creates GUI function blocks and networks for these GUI components 204. The GUI development component 210 then provides access to the GUI function block networks to a user via the user interface 212. The GUI development component 210 presents an HMI based on the GUI component function block network to the user in a visual WYSIWYG (what-you-see-is-what-you-get) fashion. The user can select, combine, modify, and/or delete aspects of the GUI function blocks to achieve a desired GUI for an automation process. In some instances, the user can develop an HMI by, for example, dragging GUI components from a selection palette and arranging them in a visual environment provided by the GUI development component 210 via the user interface 212. This allows a visual preview of the designed HMI. By selecting adequate layouts (e.g., grid and flow layouts), a user can define how the GUI components are arranged.

The GUI development component 210 then outputs the desired GUI elements as GUI component function blocks 206. The GUI component function blocks 206 can then be combined with control/monitor functionality and utilized to control and/or monitor automation processes. Validation components (not shown) can also be employed with the GUI development component 210 and/or stand-alone to simulate process parameters to allow users to test various GUIs based on the GUI component function blocks 206. The GUI development component 210 can also utilize the GUI modeling component 208 to rebuild new function block networks during the development process (e.g., when a user adds or deletes GUI components during development). The GUI component function blocks 206 can include, but are not limited to, XML (extensible markup language) encoded files that contain, for example, IEC 61499 compliant basic and composite function blocks, devices, and/or resource and/or system descriptions/configurations for utilization in other compliant engineering tools.

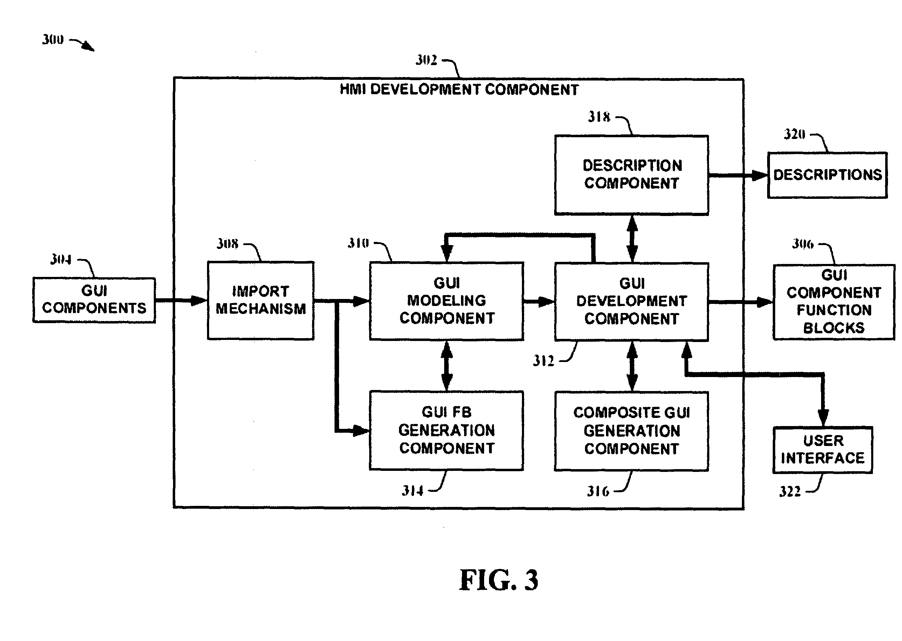

Looking at FIG. 3, yet another block diagram of an HMI development system 300 in accordance with an aspect of an embodiment is illustrated. The HMI development system 300 is comprised of an HMI development component 302 that receives GUI components 304 and provides GUI component function blocks 306. The HMI development component 302 is comprised of an import mechanism 308, a GUI modeling component 310, a GUI development component 312 that interfaces directly and/or indirectly with a user interface 322, a GUI function block (FB) generation component 314, a composite GUI generation component 316, and a description component 318 that provides descriptions 320. The GUI components 304 can include function block compatible components and/or other components not formatted for utilization with an extensible engineering platform and the like. The GUI components 304 can also include, but are not limited to, basic GUI components, composite GUI components, and/or logical GUI components and the like. The import mechanism 308 receives the GUI components 304 and encapsulates/formats them as required for utilization within an extensible engineering platform and/or other systems. This is typically accomplished with self-contained, re-usable component software such as, for example, variants of Sun Microsystem's Java™ and JavaBeans™ and the like. In some instances, the import mechanism 308 can automatically parse a GUI component to provide elements of a required format.

The GUI modeling component 310 can receive the imported GUI components directly from the import mechanism 308 and then employ the GUI function block (FB) generation component 314 and/or the GUI function block (FB) generation component 314 can receive the imported GUI components and transform them into function blocks before sending them to the GUI modeling component 310 for generation into GUI function block networks. The GUI development component 312 provides a visual representation of an HMI based on the GUI function block networks to a user via the user interface 322. A user can add, delete, and modify the GUI components as required. The GUI development component 312 can then employ the composite GUI generation component 316 to generate composite GUIs as required based on selections from the user. The GUI development component 312 can then provide the GUI component function blocks 306 to be further utilized in an extensible engineering platform. In some instances, logical GUIs or descriptions of devices, resources and/or systems are generated by the description component 318 based on the HMI developed by the GUI development component 312 and are output as the descriptions 320. In yet other instances, the GUI component function blocks 306 can represent HMI related information such as, for example, GUIs and/or descriptions and the like. It is understood that although various components are illustrated as separate elements, some instances can incorporate some or all of the functionality of individual components into a single component. Likewise, not all of the components are necessary for every instance. For example, the import mechanism 308 might not be required if the GUI components 304 are already encapsulated in a format compatible with the extensible engineering platform. Similarly, the GUI modeling component 310 can also provide the functionality of the import mechanism 308 and/or the GUI function block (FB) generation component 314 and the like. Moreover, the GUI development component 312 can also provide the functionality of the composite GUI generation component 316 and/or the description component 318 and the like.

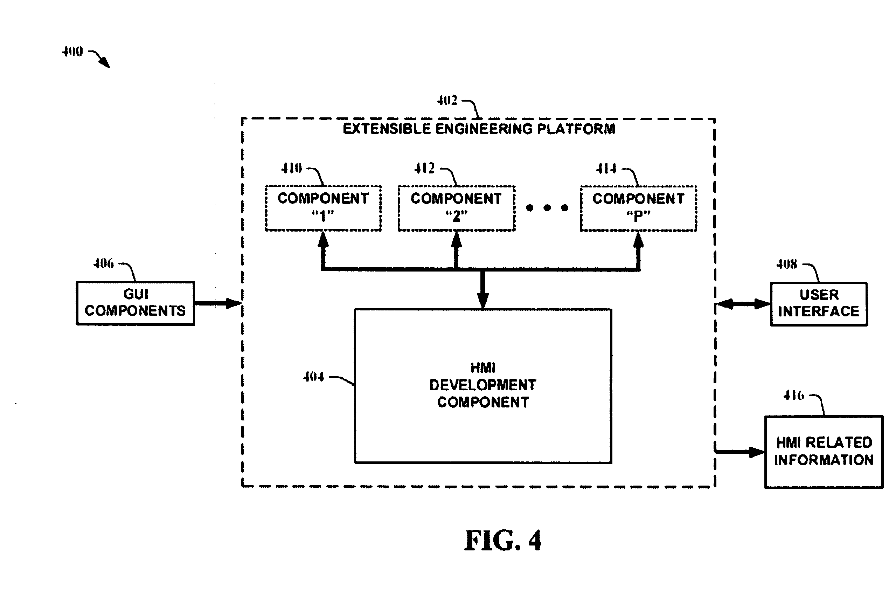

Referring to FIG. 4, a block diagram of an HMI development component 404 operating in an extensible engineering environment 400 in accordance with an aspect of an embodiment is shown. The extensible engineering environment 400 includes an extensible engineering platform 402 that interfaces with the HMI development component 404. The extensible engineering platform 402 includes components "1-P" 410-414, where "P" represents an integer from one to infinity. The components "1-P" 410-414 represent applications within the extensible engineering platform 402 with which the HMI development component 404 can interface. The interfacing is generally accomplished through application programming interfaces (APIs). The components "1-P" 410-414 can include, but are not limited to, APIs for data objects, nodes, cookies, file systems, data systems, actions, and/or editors and the like.

GUI components 406 can be received by the HMI development component 404 directly and/or indirectly via the extensible engineering platform 402 through one or more of the components "1-P" 410-414. Likewise, GUI component related information such as HMI related information 416 can be directly obtained from the HMI development component 404 and/or obtained via one or more components "1-P" 410-414. Similarly, the user interface 408 can interact directly with the HMI development component 404 and/or indirectly via one or more components "1-P" 410-414. By interfacing with the extensible engineering platform 402, the HMI development component 404 can provide GUI development capabilities without requiring extensive incorporation of applications already provided by the extensible engineering platform 402. This saves programming code and also substantially reduces the learning curve. Moreover, the HMI development component 404 can be constructed as a direct plug-in module for the extensible engineering platform 402. This allows the HMI development component 404 to substantially enhance the capabilities of the extensible engineering platform in HMI development while requiring minimal integration effort.

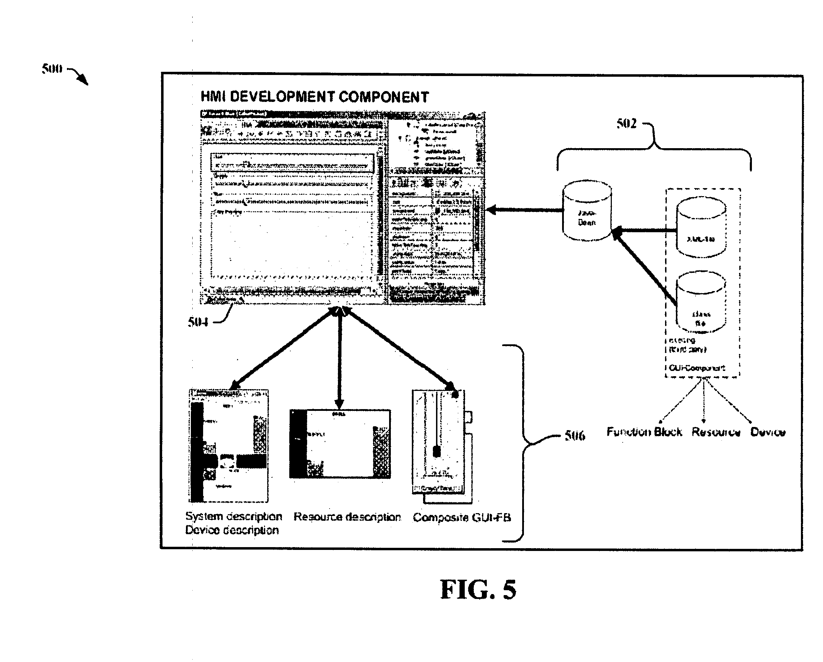

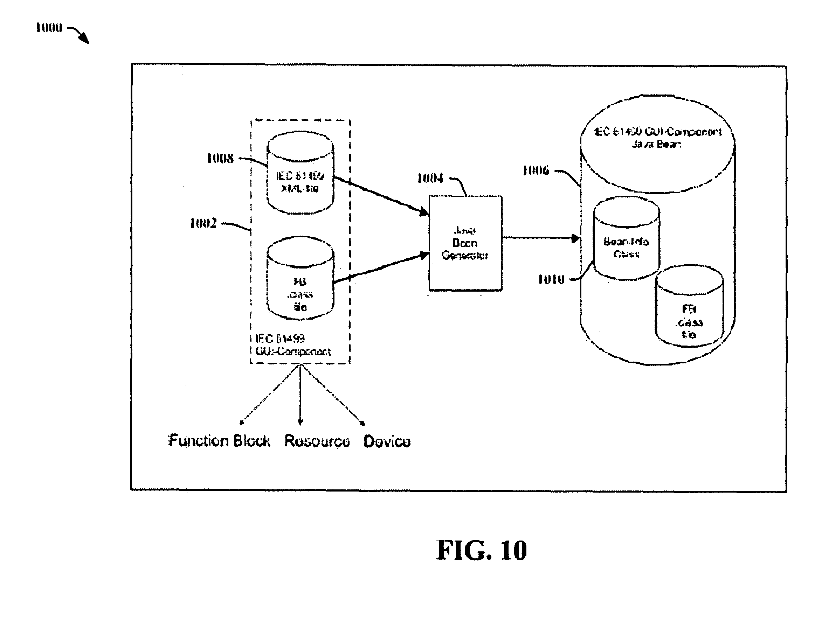

Turning to FIG. 5, an illustration 500 of an HMI development component 504 and typical process flow in accordance with an aspect of an embodiment is depicted. An input 502 is processed and made available to the HMI development component 504. The input 502 processing illustrated employs an example process utilizing JavaBean™ encapsulation discussed *infra* and illustrated in FIG. 10. A user can view a visual representation of the HMI development component 504 and build an HMI through an interactive process discussed *supra.* The HMI development component 504 then provides outputs 506. The outputs 506 can include, but are not limited to, device, system and/or resource descriptions and composite GUI function blocks and the like including basic GUI function blocks.

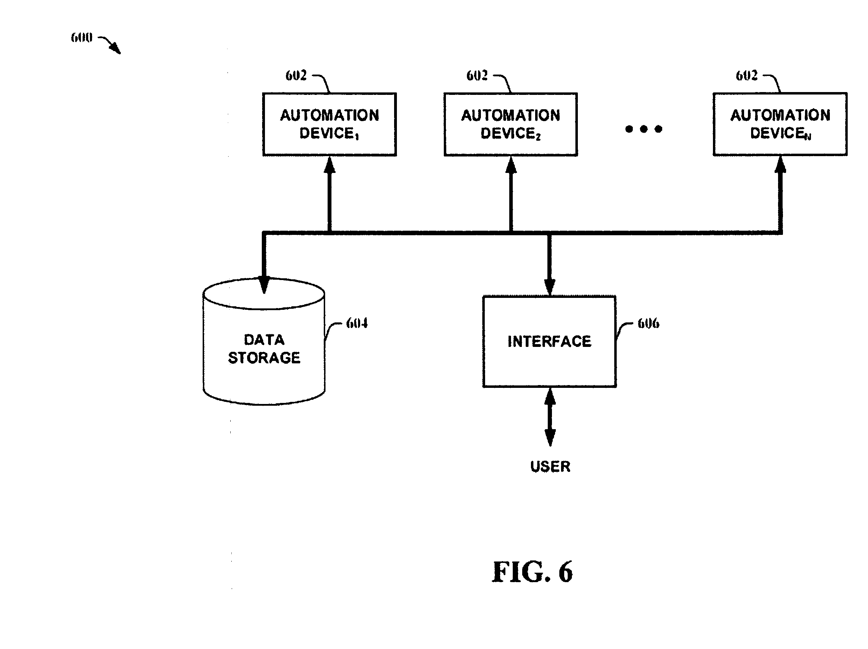

The above systems are utilized to create controls and/or monitoring systems for automation systems. Looking at FIG. 6, a block diagram of an automation system 600 in accordance with an aspect of an embodiment is shown. The automation system 600 is comprised of one or more automation device(s) 602 (AUTOMATION DEVICE through AUTOMATION DEVICE_{N}, where N is an integer from one to infinity), data storage 604 and interface 606. Automation device(s) 602 can include any one of a plurality of industrial, commercial and/or entertainment processes and machines such as programmable logic controllers (PLCs), pumps providing fluid transport and other processes, fans, conveyor systems, compressors, gear boxes, motion control and detection devices, sensors, screw pumps, and mixers, as well as hydraulic and pneumatic machines driven by motors. Such motors can be combined with other components, such as valves, pumps, furnaces, heaters, chillers, conveyor rollers, fans, compressors, gearboxes, and the like, as well as with appropriate motor drives to form industrial machines and actuators. For example, an electric motor could be combined with a motor drive providing variable electrical power to the motor, as well as with a pump, whereby the motor rotates the pump shaft to create a controllable pumping system.

Data storage 604 provides a storage location for housing data relating to automation device(s) 602 including but not limited to device description, location, and mechanical condition, energy or fuel consumption, completed cycles, horsepower, average RPM, efficiency rating, as well as data from sensors regarding device health *and*/*or* performance. The data storage 604 can be integrated or federated and linked by a communication system. Interface 606 is operable to connect users with a network of automation devices 602 *and*/*or* data storage 604 *via* a wire (*e*.*g*., twisted pair, coaxial cable, optical fiber, Ethernet, USB (Universal Serial Bus), FireWire) or wirelessly (*e*.*g*., using IEEE 802.11a *and*/*or* IEEE 802.11b standards, Bluetooth technology, satellite). Interface 606 facilitates monitoring, extracting, transmitting, and otherwise interacting with automated device(s) 602 and associated data.

As shown in FIG. 6, a user such as, for example, a device operator can connect to data storage 604 and automation devices 602 over a local area network (LAN) utilizing a variety of LAN technologies, including Fiber Distributed Data Interface (FDDI), Copper Distributed Data Interface (CDDI), Ethernet/IEEE 802.3, Token Ring/IEEE 802.5, physical connection topologies such as bus, tree, ring, and star, and the like. However, communications between networked devices such as automation devices 602, data storage 604, and interface 606 need not be limited to those devices connected locally to a network. Local networked devices can also communicate to and from remote devices.

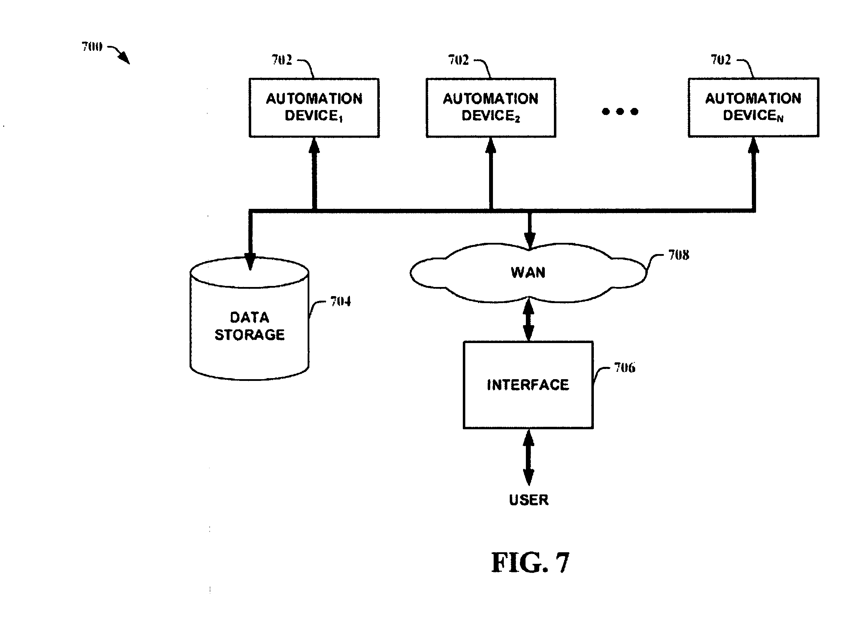

Turning to FIG. 7, another block diagram of an automation system 700 in accordance with an aspect of an embodiment is depicted. FIG. 7 is substantially the same as system 600 except that a user employs interface 706 to interact with automation devices 702 and data storage 704 remotely over a wide area network (WAN) 708. WANs 708 are communication networks that span a large geographic area (e.g., nationwide, worldwide) and generally consist of the several interconnected local area networks (LANs) and metropolitan area networks (MANs). The largest WAN 708 in existence today is the Internet. WAN technologies include, but are not limited to, point-to-point links, circuit switching networks like Integrated Services Digital Networks (ISDN) and variations thereon, packet switching networks, T1 networks, and Digital Subscriber Lines (DSL).

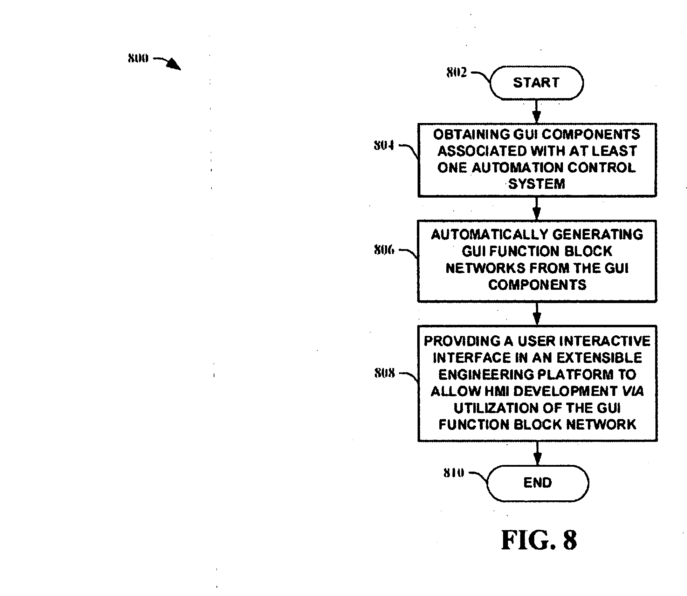

In view of the exemplary systems shown and described above, methodologies that may be implemented in accordance with the embodiments will be better appreciated with reference to the flow charts of FIGs. 8-9. While, for purposes of simplicity of explanation, the methodologies are shown and described as a series of blocks, it is to be understood and appreciated that the embodiments are not limited by the order of the blocks, as some blocks may, in accordance with an embodiment, occur in different orders *and*/*or* concurrently with other blocks from that shown and described herein. Moreover, not all illustrated blocks may be required to implement the methodologies in accordance with the embodiments.

The embodiments may be described in the general context of computer-executable instructions, such as program modules, executed by one or more components. Generally, program modules include routines, programs, objects, data structures, *etc.,* that perform particular tasks or implement particular abstract data types. Typically, the functionality of the program modules may be combined or distributed as desired in various instances of the embodiments.

Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, carrier, or media.

In FIG. 8, a flow diagram of a method 800 of facilitating HMI development in accordance with an aspect of an embodiment is shown. The method 800 starts 802 by obtaining GUI components associated with at least one automation control system 804. The GUI components can include, but are not limited to, basic GUI components, composite GUI components, and/or logical GUI components such as device, resource and/or system descriptions and the like. GUI function block networks are then automatically generated from the GUI components 806. This can include generating GUI function blocks that are then linked to form the GUI function block network. A user interactive interface is then provided in an extensible engineering platform to allow HMI development *via* utilization of the GUI function block network 808, ending the flow 810. Utilization within the extensible engineering platform allows for encapsulation of GUI components in a common format that easily conforms to the extensible engineering platform, allowing existing GUI elements to be readily imported. Users can easily manipulate the GUI function block networks to create desired HMIs.

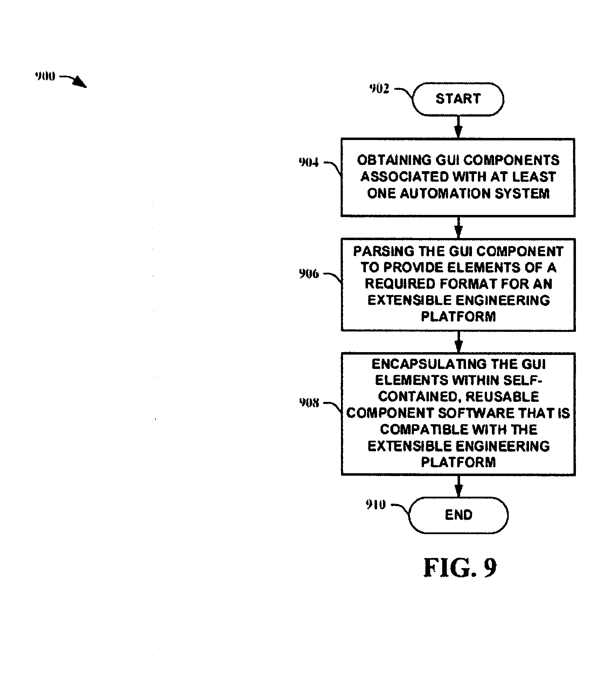

Looking at FIG. 9, a flow diagram of a method 900 of importing GUI components for HMI development in accordance with an aspect of an embodiment is depicted. The method 900 starts 902 by obtaining GUI components associated with at least one automation system 904. The GUI component is then parsed to provide elements of a required format for an extensible engineering platform 906. The GUI elements are then encapsulated within self-contained, reusable component software that is compatible with the extensible engineering platform 908, ending the flow 910. This substantially improves the importing of existing GUI function blocks. For example, FIG. 10 illustrates a flow 1000 where a JavaBean™ based method can be employed on a GUI component 1002 to parse an IEC 61499 XML file 1008 by a JavaBean™ generator 1004 and, based on this file, generate a JavaBean™ including a BeanInfo class 1010. Configuration parameters can then be detected utilizing a mechanism that looks for all data inputs that are bonded with the event-input INIT. This configuration interface is extended with code for instantiating and executing the IEC 61499 GUI component. This code is independent of the IEC 61499 GUI component and can be incorporated into the JavaBean™ mechanism in text form. The JavaBean™ is representative of a self-contained component that can be utilized in a specific tool integration platform. The BeanInfo class is representative of a type of interface and instantiation support. Thus, similar methods can be employed with generic representations of the JavaBean^{TM} and BeanInfo class in other integrated development environments.

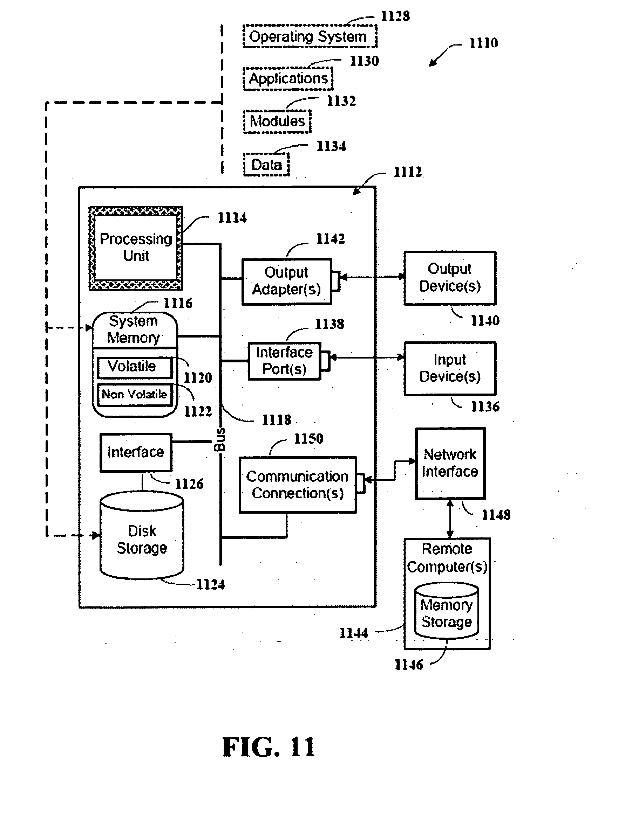

In order to provide additional context for implementing various aspects of the embodiments, FIG. 11 and the following discussion is intended to provide a brief, general description of a suitable computing environment 1100 in which the various aspects of the embodiments can be implemented. While the embodiments have been described above in the general context of computer-executable instructions of a computer program that runs on a local computer *and*/*or* remote computer, those skilled in the art will recognize that the embodiments can also be implemented in combination with other program modules. Generally, program modules include routines, programs, components, data structures, *etc.,* that perform particular tasks *and*/*or* implement particular abstract data types. Moreover, those skilled in the art will appreciate that the inventive methods can be practiced with other computer system configurations, including single-processor or multi-processor computer systems, minicomputers, mainframe computers, as well as personal computers, handheld computing devices, microprocessor-based *and*/*or* programmable consumer electronics, and the like, each of which can operatively communicate with one or more associated devices. The illustrated aspects of the embodiments can also be practiced in distributed computing environments where certain tasks are performed by remote processing devices that are linked through a communications network. However, some, if not all, aspects of the embodiments can be practiced on stand-alone computers. In a distributed computing environment, program modules can be located in local *and*/*or* remote memory storage devices.

As used in this application, the term "component" is intended to refer to a computer-related entity, either hardware, a combination of hardware and software, software, or software in execution. For example, a component can be, but is not limited to, a process running on a processor, a processor, an object, an executable, a thread of execution, a program, and a computer. By way of illustration, an application running on a server *and*/*or* the server can be a component. In addition, a component can include one or more subcomponents.

With reference to Fig. 11, an exemplary environment 1110 for implementing various aspects of the invention includes a computer 1112. The computer 1112 includes a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114.

The system bus 1118 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1116 includes volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable ROM (EEPROM), or flash memory. Volatile memory 1120 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1112 also includes removable/non-removable, volatile/non-volatile computer storage media. Fig. 11 illustrates, for example, disk storage 1124. Disk storage 1124 includes, but is not limited to, devices like a magnetic disk drive, floppy disk drive, tape drive, Jaz drive, Zip drive, LS-100 drive, flash memory card, or memory stick. In addition, disk storage 1124 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1124 to the system bus 1118, a removable or non-removable interface is typically used such as interface 1126.

It is to be appreciated that Fig 11 describes software that acts as an intermediary between users and the basic computer resources described in suitable operating environment 1110. Such software includes an operating system 1128. Operating system 1128, which can be stored on disk storage 1124, acts to control and allocate resources of the computer system 1112. System applications 1130 take advantage of the management of resources by operating system 1128 through program modules 1132 and program data 1134 stored either in system memory 1116 or on disk storage 1124. It is to be appreciated that the present invention can be implemented with various operating systems or combinations of operating systems.

A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 *via* interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port may be used to provide input to computer 1112 and to output information from computer 1112 to an output device 1140. Output adapter 1142 is provided to illustrate that there are some output devices 1140 like monitors, speakers, and printers, among other output devices 1140 that require special adapters. The output adapters 1142 include, by way of illustration and not limitation, video and sound cards that provide a means of connection between the output device 1140 and the system bus 1118. It should be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a personal computer, a server, a router, a network PC, a workstation, a microprocessor based appliance, a peer device or other common network node and the like, and typically includes many or all of the elements described relative to computer 1112. For purposes of brevity, only a memory storage device 1146 is illustrated with remote computer(s) 1144. Remote computer(s) 1144 is logically connected to computer 1112 through a network interface 1148 and then physically connected *via* communication connection 1150. Network interface 1148 encompasses communication networks such as local-area networks (LAN) and widearea networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1150 refers to the hardware/software employed to connect the network interface 1148 to the bus 1118. While communication connection 1150 is shown for illustrative clarity inside computer 1112, it can also be external to computer 1112. The hardware/software necessary for connection to the network interface 1148 includes, for exemplary purposes only, internal and external technologies such as, modems including regular telephone grade modems, cable modems and DSL modems, ISDN adapters, and Ethernet cards.

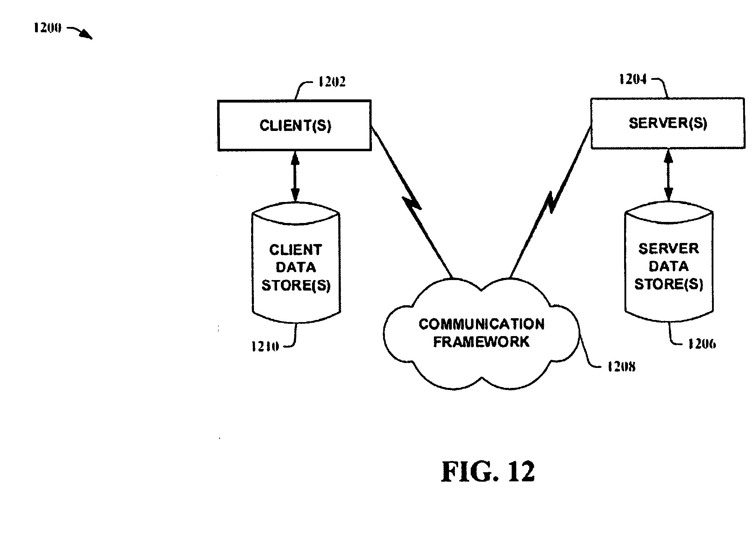

FIG. 12 is another block diagram of a sample computing environment 1200 with which embodiments can interact. The system 1200 further illustrates a system that includes one or more client(s) 1202. The client(s) 1202 can be hardware *and*/*or* software (*e*.*g*., threads, processes, computing devices). The system 1200 also includes one or more server(s) 1204. The server(s) 1204 can also be hardware *and*/*or* software (*e*.*g*., threads, processes, computing devices). One possible communication between a client 1202 and a server 1204 can be in the form of a data packet adapted to be transmitted between two or more computer processes. The system 1200 includes a communication framework 1208 that can be employed to facilitate communications between the client(s) 1202 and the server(s) 1204. The client(s) 1202 are connected to one or more client data store(s) 1210 that can be employed to store information local to the client(s) 1202. Similarly, the server(s) 1204 are connected to one or more server data store(s) 1206 that can be employed to store information local to the server(s) 1204.

In one instance of an embodiment, a data packet transmitted between two or more computer components that facilitates control of automation systems is comprised of, at least in part, information relating to a GUI component that is represented by, at least in part, a function block compatible with automation development systems.

It is to be appreciated that the systems *and*/*or* methods of the embodiments can be utilized in automation GUI development facilitating computer components and non-computer related components alike. Further, those skilled in the art will recognize that the systems *and*/*or* methods of the embodiments are employable in a vast array of electronic related technologies, including, but not limited to, computers, servers *and*/*or* handheld electronic devices, and the like.

What has been described above includes examples of the embodiments. It is, of course, not possible to describe every conceivable combination of components or methodologies for purposes of describing the embodiments, but one of ordinary skill in the art may recognize that many further combinations and permutations of the embodiments are possible. Accordingly, the subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary the invention discloses a GUI framework leverages interfaces of extensible engineering platforms to provide a tool that easily constructs HMIs for automation systems. The GUI framework can import existing GUI components and/or create new GUI components. The GUI framework can also combine basic GUI components to create complex composite GUI components. An import mechanism can also be employed to import existing GUI components by encapsulating them in common, reusable software code that is compatible with an extensible engineering platform. The GUI framework utilizes function blocks to represent the GUI components and automatically generates GUI function block networks with linking as required. This allows complex GUIs to be created with minimal user effort.

## Claims

1. A system that generates human-machine interfaces (HMIs) for distributed automation systems, comprising:
a graphical user interface (GUI) modeling component (208) that automatically generates GUI function block networks from GUI components; and
a GUI development component (210) that provides interactive HMI development utilizing a GUI function block network, the GUI development component (210) interfaces with an extensible engineering platform.

2. The system of claim 1 further comprising:
an import mechanism (308) that formats GUI components (304) as required for utilization within the extensible engineering platform.

3. The system of claim 2, wherein the import mechanism (308) encapsulates the GUI components (304) within self-contained, reusable component software.

4. The system of claim 2 or 3, wherein the import mechanism (308) automatically parses a GUI component (304) to provide elements of a required format.

5. The system of one of claims 1 to 4, wherein the GUI component (304) comprises a basic GUI component or a composite GUI component.

6. The system of one of claims 1 to 5, wherein the GUI development component (312) interfaces with extensible engineering platform components to provide data handling, file handling, GUI editing, *and*/*or* user-interfacing mechanisms to assist GUI development.

7. The system of one of claims 1 to 6 further comprising:
a composite GUI generation component (316) that automatically generates composite GUI components based on function blocks selected *via* user *and*/*or* system interactions.

8. The system of one of claims 1 to 7 further comprising:
a description component (318) that provides automation device descriptions, automation system descriptions *and*/*or* automation resource descriptions based on, at least in part, generated GUI function block networks.

9. The system of one of claims 1 to 8 is compatible with International Electrotechnical Commission (IEC) standard 61499.

10. A method for generating human-machine interfaces (HMIs) for distributed automation systems, comprising:
obtaining GUI components associated with at least one automation system (804);
automatically generating GUI function block networks from the GUI components (806); and
providing a user interactive interface in an extensible engineering platform to allow HMI development *via* utilization of the GUI function block network (808).

11. The method of claim 10 further comprising:
formatting GUI components for utilization within the extensible engineering platform (904).

12. The method of claim 11, wherein the formatting includes encapsulating the GUI components within self-contained, reusable component software (904).

13. The method of claim 11 or 12 further comprising:
parsing a GUI component to provide elements of a required format (906).

14. The method of one of claims 10 to 13, wherein the GUI component comprises a basic GUI component or a composite GUI component.

15. The method of one of claims 10 to 14 further comprising:
interfacing with function components of the extensible engineering platform to provide data handling, file handling, GUI editing, *and*/*or* user-interfacing functions to promote GUI development (808).

16. The method of one of claims 10 to 15 further comprising:
automatically generating composite GUI components based on function blocks selected *via* user *and*/*or* system interactions (806).

17. The method of one of claims 10 to 16 further comprising:
generating automation device descriptions, automation system descriptions *and*/*or* automation resource descriptions based on, at least in part, GUI function block networks (806).

18. The method of one of claims 10 to 17 is compatible with International Electrotechnical Commission (IEC) standard 61499.

19. A system that generates human-machine interfaces (HMIs) for distributed automation systems, comprising:
means for automatically generating GUI function block networks from GUI components (312); and
means for utilizing a GUI function block network to provide interactive HMI development in an extensible engineering platform (316).
